# EUROPEAN PATENT APPLICATION

(11) **EP 1 528 826 A1**
(43) Date of publication of application: **04.05.2005**
(21) Application number: 03741194.9
(22) Date of filing: 04.07.2003
(51) Int. Cl.: H04Q 7/32

(54) **AUTOMATIC GAIN CONTROL DEVICE, RADIO COMMUNICATION DEVICE, AND AUTOMATIC GAIN CONTROL METHOD**

(71) Applicant: MATSUSHITA ELECTRIC INDUSTRIAL CO., LTD., Kadoma-shi, Osaka 571-8501 (JP)
(72) Inventor: ADACHI, Yasuhiro, Yokosuka-shi, Kanagawa 238-0315 (JP)
(74) Representative: Grünecker, Kinkeldey, Stockmair & Schwanhäusser Anwaltssozietät
(86) International application number: PCT/JP2003/008512
(87) International publication number: WO 2005/004512

(57) **Abstract**

An automatic gain control apparatus and method that acquires current position of its own station at the start of communication to calculate the communication distance from a communication partner station and sets an initial value for gain of its variable gain amplifier based on the calculated communication distance. The automatic gain control apparatus according to the present invention comprises a variable gain amplifier 101 that amplifies the received signal with set gain; a current position acquiring section that acquires current position of its own station at the start of communication; a receive power estimation circuit 105 that calculates the communication distance from the communication partner station based on the acquired current position of its own station and estimates the receive level of the received signal at the start of communication based on the calculated communication distance; and an initial value setting circuit 104 that sets an initial value for the gain based on the estimated receive level of the received signal.

## Description

### TECHNICAL FIELD

The present invention relates to an automatic gain control apparatus and method usable in mobile stations such as mobile phones, and base stations communicating therewith by radio in a mobile communication system.

### BACKGROUND ART

To date, an automatic gain control apparatus that has a variable gain amplifier amplifying a received signal to adjust its power to a desired level and an automatic gain control circuit automatically controlling the gain of the amplifier has been provided in mobile stations such as mobile phones and base stations communicating therewith by radio in a mobile communication system. The automatic gain control apparatus needs an initial value for the gain of the variable gain amplifier at the start of communication, for example, when the apparatus is powered on, in intermittent receiving, when switching receive frequencies or the like. A conventional automatic gain control apparatus having a function to set the initial value for the gain is disclosed in, for example, Japanese Patent Laid-Open Publication No. 59-204306. The automatic gain control apparatus described in this publication retains gain for current communication to use the value of the gain as an initial value for gain for the next communication. Hence, according to this automatic gain control apparatus, the time required for the gain to become stable can be shortened in the next communication.

However, with the automatic gain control apparatus described in the above publication, when the communication environment between a radio communication apparatus provided with this automatic gain control apparatus and its communication partner station changes during the period from the end of current communication to the start of the next communication, for example, when the radio communication apparatus or the communication partner station has moved or the influence of fading has changed, the problem occurs that it is difficult to amplify the received signal to an appropriate power level for a while from the start of the next communication.

### DISCLOSURE of INVENTION

An object of the present invention is to amplify the received signal to an appropriate power level at the start of communication and to provide an automatic gain control apparatus and method that can automatically set an appropriate initial value for the gain of the variable gain amplifier.

This object is achieved by acquiring its own current position at the start of communication to calculate the communication distance from its communication partner station and setting an initial value for the gain of the variable gain amplifier based on the communication distance calculated.

### BRIEF DESCRIPTION OF THE DRAWINGS

FIG. 1 is a block diagram showing the configuration of an automatic gain control apparatus according to embodiment 1 of the present invention;
FIG. 2 is a block diagram showing the configuration of a receive power estimation circuit that is a constituent of the automatic gain control apparatus according to embodiment 1 of the present invention;
FIG. 3 is a block diagram showing the configuration of a receiving section of a radio communication apparatus according to embodiment 2 of the present invention; and
FIG. 4 is a view showing the configuration of a mobile communication system associated with embodiment 3 of the present invention.

### Best Mode for Carrying out the Invention

Embodiments of the present invention will be described in detail below with reference to the drawings.

### (Embodiment 1)

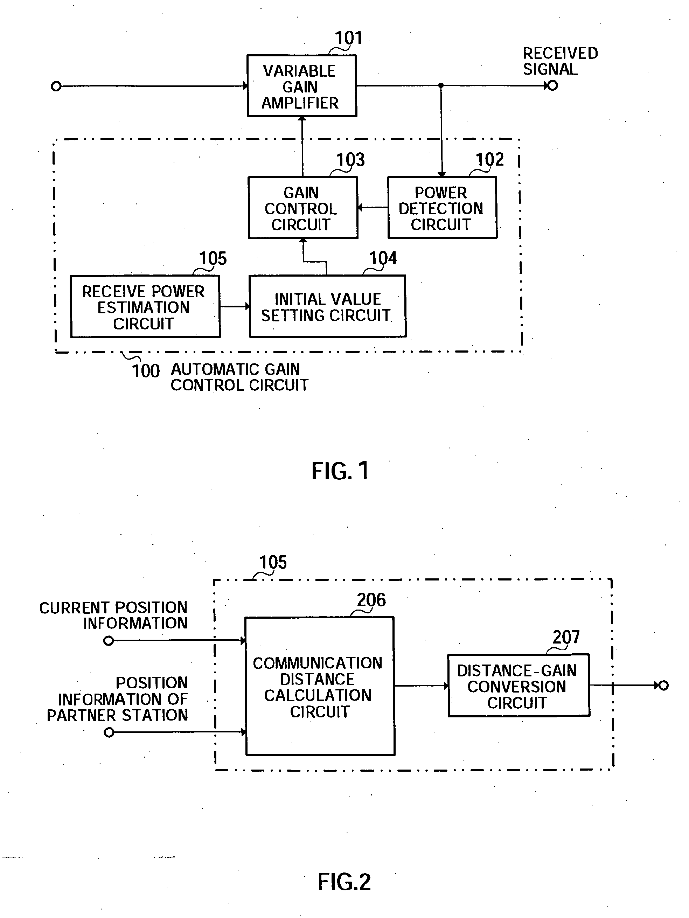

FIG. 1 is a block diagram showing the configuration of an automatic gain control apparatus according to embodiment 1 of the present invention. Note that, although the automatic gain control apparatus of the present embodiment is used in various radio communication apparatuses such as mobile stations and base stations in a mobile communication system, the configuration of the main body of the radio communication apparatus is omitted.

In FIG. 1, the automatic gain control apparatus of the present embodiment comprises a variable gain amplifier 101 and an automatic gain control circuit 100. The automatic gain control circuit 100 comprises a power detection circuit 102, a gain control circuit 103, an initial value setting circuit 104, and a receive power estimation circuit 105.

The power detection circuit 102 detects the power level of the received signal amplified at the variable gain amplifier 101 with gain (amplification rate) set at a predetermined value, and inputs the detected value into the gain control circuit 103.

The gain control circuit 103 inputs to the variable gain amplifier 101 a control signal to control the gain setting in the variable gain amplifier 101 based on the detected value of the power level input from the power detection circuit 102 such that the variable gain amplifier 101 amplifies the received signal to an appropriate power level.

The variable gain amplifier 101 adjusts the power level of the received signal to be output by it by changing the setting value for the gain according to the control signal input from the gain control circuit 103. That is, the power detection circuit 102 and the gain control circuit 103 control in a feedback manner the setting value for the gain of the variable gain amplifier 101 based on the power level of the received signal actually output by the amplifier such that the received signal is amplified to an appropriate power level after the start of communication.

FIG. 2 is a block diagram showing the configuration of the receive power estimation circuit 105. The receive power estimation circuit 105 comprises a communication distance calculation circuit 206 and a distance-gain conversion circuit 207.

Current position of its own station and position information of the communication partner station are input into the communication distance calculation circuit 206 at the start of communication. Note that the current position of its own station is acquired by a current position acquiring section such as a GPS (Global Positioning System) unit (not shown). Furthermore, when the communication partner station is a fixed station, the position information of the communication partner station can be stored beforehand in a storing section such as memory (not shown), and when the communication partner station is a mobile station, position information thereof can be acquired by having the communication partner station transmit current-position information thereof at the start of communication. Moreover, when the communication partner station is a mobile station and the time interval between the end of current communication and the start of the next communication is short, the station can obtain information about position of the communication partner station at the start of the next communication by finding the movement situation of the communication partner station at the end of the current communication and, from the movement situation, estimating where the communication partner station is at the end of the time interval.

The communication distance calculation circuit 206 calculates the communication distance from the communication partner station based on the current position of its own station and the position information of the communication partner station, which are input, and inputs the calculated communication distance into the distance-gain conversion circuit 207.

The distance-gain conversion circuit 207 estimates the receive level of the received signal at the start of the next communication based on the communication distance input from the communication distance calculation circuit 206, and inputs the estimated receive level into the initial value setting circuit 104. In this receive level estimation by the distance-gain conversion circuit 207, communication environment variation information such as the variation of fading may be taken into account, which is input from a receive electric field level monitor (not shown). The receive electric field level monitor can be materialized by using known pilot signals inserted at constant intervals into the received signal. If the distance-gain conversion circuit 207 takes into account the communication environment variation information input from the receive electric field level monitor, even when the communication environment has varied greatly immediately before the start of the next communication, the gain of the variable gain amplifier 101 can be set at an appropriate value at the start of the next communication.

The initial value setting circuit 104 sets such an initial value for the gain of the variable gain amplifier 101 that the received signal amplified by the variable gain amplifier 101 has an appropriate level of power, based on the receive level of input from the receive power estimation circuit 105 and inputs this initial value into the gain control circuit 103.

The gain control circuit 103 generates a control signal for increasing or decreasing the gain of the variable gain amplifier 101 depending on the initial value input from the initial value setting circuit 104 and inputs this control signal into the variable gain amplifier 101.

Then the variable gain amplifier 101 adjusts an initial value for its gain according to the control signal input from the gain control circuit 103 at the start of the communication and amplifies the received signal with gain of this initial value to output.

As described above, according to the automatic gain control apparatus of the present embodiment, the communication distance is calculated based on the current position of its own station measured with a GPS unit or the like at the start of communication and the position information of the communication partner, and thereby the receive level of the received signal at the start of the communication can be estimated. And according to the automatic gain control apparatus of the present embodiment, an initial value for the gain of the variable gain amplifier 101 is set such that the received signal output from the variable gain amplifier 101 has an appropriate level of power, based on the estimated receive level of the received signal. Thus, the time required for the power level of the received signal to converge and become stable after the start of communication can be shortened. That is, according to the automatic gain control apparatus of the present embodiment, even when the communication distance has changed by the own station itself or the communication partner station moving or the state of fading varies during the period from the end of current communication to the start of the next communication, an initial value for the gain of the variable gain amplifier 101 can be set appropriately at the start of the next communication. Thus, it is possible to amplify the received signal to an appropriate power level from the start of the next communication.

Moreover, in the automatic gain control apparatus according to the present embodiment, by having the communication environment variation information from the receive electric field level monitor input into the distance-gain conversion circuit 207 to be taken into account, the gain of the variable gain amplifier 101 can be set at an appropriate value at the start of communication even when the communication environment has varied greatly immediately before the start of communication. Thus, the power level of the received signal can be made stable from immediately after the start of the communication.

While in the present embodiment the case has been described where a GPS unit is used to acquire current position of its own station, the present invention is not limited to this, but known means capable of acquiring position information of its own station can be used instead of the GPS unit.

### (Embodiment 2)

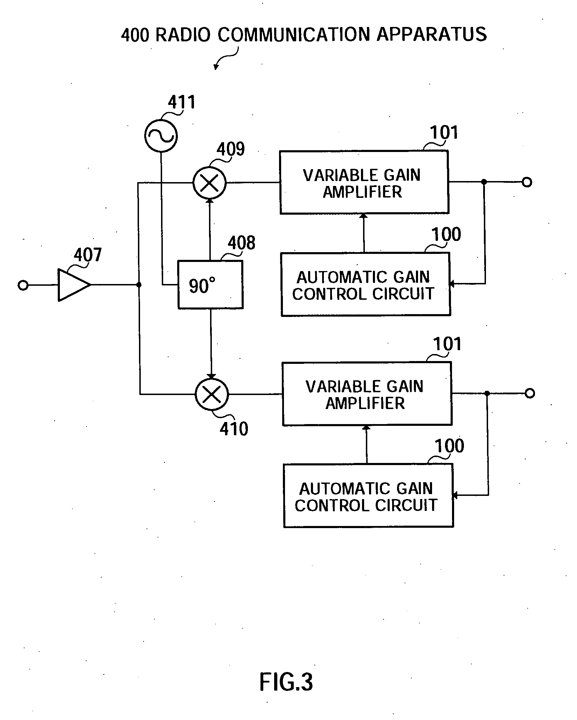

FIG. 3 is a block diagram showing the configuration of a receiving section of a radio communication apparatus according to embodiment 2 of the present invention. Note that identical parts to those of the automatic gain control apparatus of embodiment 1 in FIG. 3 are indicated by the same reference numerals, and a description thereof is omitted.

In FIG. 3, the radio communication apparatus 400 comprises an amplifier 407, a 90 phase shifter 408, mixers 409 and 410, a local oscillator 411, two variable gain amplifiers 101, and automatic gain control circuits 100 respectively corresponding to the variable gain amplifiers 101.

In this configuration, after amplified by the amplifier 407, the received signal is converted by the mixers 409 and 410 into base band signals. These base band signals are amplified to an appropriate power level in the respective variable gain amplifiers 101 and are output.

This radio communication apparatus 400 produces the same action and effect as the automatic gain control apparatus described in embodiment 1 because of having the automatic gain control circuits 100 described in embodiment 1.

### (Embodiment 3)

Next, a mobile communication system having as a constituent a mobile station provided with an automatic gain control apparatus according to embodiment 3 of the present invention will be described. A description of the same operations as in the automatic gain control apparatus and radio communication apparatus explained in embodiments 1 and 2 is omitted. Note that in the present embodiment its communication partner is a base station and the mobile station obtains its own current position by a GPS unit.

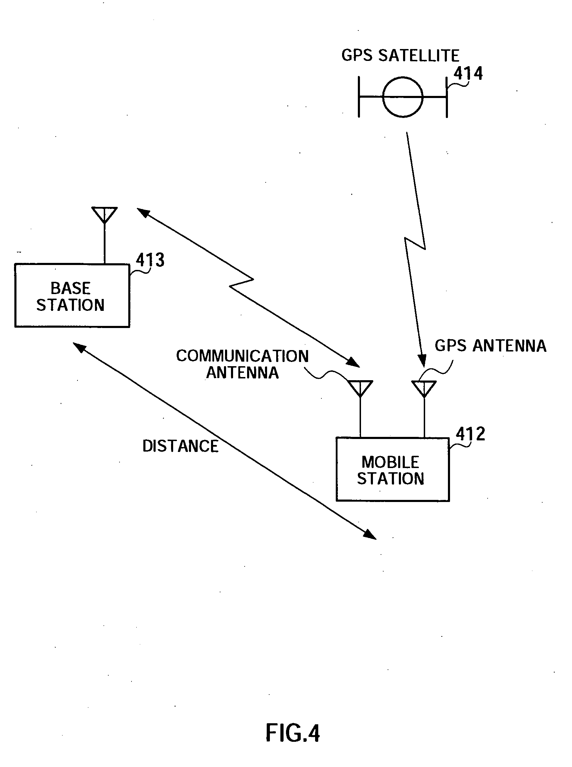

FIG. 4 shows the configuration of the mobile communication system having a radio communication apparatus according to the present embodiment. The mobile communication system of FIG. 4 comprises a mobile station 412 of interest, a base station 413 as the communication partner of the mobile station, and a GPS satellite 414.

The mobile station 412 has the radio communication apparatus 400 shown in FIG. 3 incorporated therein in order to amplify the received signal to an appropriate power level to make it stable as early as possible even in a communication environment where the receive level of the received signal varies. This radio communication apparatus 400 produces the same action and effect as the automatic gain control apparatus according to embodiment 1 because of having the automatic gain control circuits 100 described in embodiment 1.

As described above, according to the present invention, a station calculates the communication distance based on its current position acquired at the start of communication and position information of its communication partner station, and based on the calculated communication distance, the receive level of the received signal is estimated, so that an initial value for the gain of the variable gain amplifier is set. Thus, even when the communication environment around the station has changed during the period from the end of current communication to the start of the next communication, it is possible to amplify the received signal to an appropriate receive level from the start of the next communication. As a result, the time required for the receive level of the received signal to converge and become stable after the start of the next communication can be shortened.

The present description is based on Japanese Patent Application No. 2002-007249 filed on January 16, 2002, which is herein incorporated by reference.

### INDUSTRIAL APPLICABILITY

The present invention can be applied to automatic gain control apparatuses provided in radio communication apparatuses such as mobile station and base station apparatuses in a mobile communication system.

## Claims

1. An automatic gain control apparatus comprising:
a variable gain amplifier that amplifies a received signal with set gain;
a current position acquiring section that acquires current position of its own station at a start of communication;
an estimation section that calculates a communication distance from a communication partner station based on said acquired current position of its own station and estimates a receive level of the received signal at the start of communication based on said calculated communication distance; and
an initial value setting section that sets an initial value for said gain based on the estimated receive level of said received signal.

2. The automatic gain control apparatus according to claim 1, further comprising:
a storing section that stores position information of said communication partner station,
wherein said estimation section calculates said communication distance from said communication partner station based on said acquired current position of its own station and the stored position information of said communication partner station.

3. The automatic gain control apparatus according to claim 1, further comprising:
a detection section that detects a power level of said received signal amplified with said gain by said variable gain amplifier; and
a control section that controls setting of said gain of said variable gain amplifier after the start of communication based on said detected power level.

4. A radio communication apparatus comprising an automatic gain control apparatus according to claim 1.

5. An automatic gain control method comprising the steps of:
amplifying a received signal with set gain;
acquiring current position of its own station at a start of communication;
calculating a communication distance from a communication partner station based on said acquired current position of its own station;
estimating a receive level of the received signal at the start of communication based on said calculated communication distance; and
setting an initial value for said gain based on the estimated receive level of said received signal.
